# EUROPEAN PATENT SPECIFICATION

(11) **EP 3 322 677 B1**
(45) Date of publication and mention of the grant of the patent: **28.11.2018**
(21) Application number: 16747645.6
(22) Date of filing: 21.06.2016
(51) Int. Cl.: C03C 17/36

(54) **ARCHITECTURAL GLASS WITH LOW-E COATING HAVING MULTILAYER LAYER STRUCTURE WITH HIGH DURABILITY**
ARCHITEKTONISCHES GLAS MIT LOW-E-BESCHICHTUNG MIT MEHRLAGIGER SCHICHTSTRUKTUR MIT HOHER HALTBARKEIT
VERRE ARCHITECTURAL POURVU D'UN REVÊTEMENT A FAIBLE ÉMISSIVITÉ AYANT UNE STRUCTURE MULTICOUCHE ET DOUÉ D'UNE DURABILITÉ ÉLEVÉE

(30) Priority: 15.07.2015 TR 201508897
(43) Date of publication of application: 23.05.2018
(73) Proprietor: Türkiye Sise Ve Cam Fabrikalari A.S., 34947 Tuzla (TR)
(72) Inventor: DENIZ, Birsel, 34330 Kocaeli (TR); ISMAIL, Hasan, 34330 Kocaeli (TR)
(74) Representative: Kaya, Erdem
(86) International application number: PCT/TR2016/050185
(87) International publication number: WO 2017/010958

(56) References cited:
- EP-A1- 1 077 203
- EP-B1- 1 465 841
- WO-A1-2012/118469
- US-A1- 2002 021 495

## Description

### TECHNICAL FIELD

Certain example embodiments of this invention relate to glass substrate with low emissivity (low-E) coatings that a used for minimizing heat transmission. Low-e coatings are deposited in the vacuum environment with magnetron sputtering. The coating contains barrier layer systems including multiple dielectric layers advantageously increases layer quality, mechanical durability, corrosion and/or scratch resistance. Coated articles according to certain example embodiments of this invention may be used in the context of insulating glass (IG) window units, vehicle windows, other types of windows, or in any other suitable application.

### BACKGROUND OF THE INVENTION

This type of low-e coated glass structures is more particularly used for architectural and automotive industry which is useful for having high visible transmission and low emissivity. High visible transmission can allow more sunlight in the 380-780 nm range to pass through the glass windows, thus being desirable in many window applications. Low emissivity can block infrared (IR) radiation to reduce heat transmission between interiors and the exteriors of the buildings.

By this, uncomfortable overheating in summer or heat loss in winter can be avoided which will curb energy consumption for air conditioning in summer or heating in winter. To take advantage for this effect more efficiently, designers are increasing the ratio between the areas of glass surface and the whole surface area of the structure.

Since Low-e coated glass is a soft coating, it is used in an insulated glass (IG) unit in the buildings to protect coated side. Conventional IG window units include at least first and second glass substrates (one of which may have a solar control coating on an interior surface thereof) that are coupled to one another via at least one seal(s) or spacer(s). The gap between the glass substrates may or may not be filled with gas and/or evacuated to a low pressure in different instances.

US4790922 discloses; using titanium as a protective layer on either side of a layer of silver for making temperable low emissivity windows. The titanium layers will protect the silver layer from oxidizing when the glass is heated to shape the glass. The invention also can be used to protect a layer of stainless steel when making temperable reflective windows.

The European Patent Publication EP 1 465 841 B1 describes an anti-reflective low-e coating supported by a glass substrate, the coating comprises, in sequence outwardly from the glass substrate, the following stacking: Glass/TiO₂/Ag/NiCr/TiO₂/SiOₓN_{y}/SiO₂.

EP0747330 discloses a translucent pane has, on one side of a substrate, a novel layer system comprising: (a) a 20-70 nm thick first layer of ZnO, SnO2, In2O3, B2O3, TiO2, ZrO2, Ta2O5, SiO2, Al2O3 or their mixts., AIN, Si3N4 or their mixts. or aluminium, titanium, zirconium and/or silicon oxynitrides; (b) a 1-40 (pref. 5) nm thick second layer of Zn and/or Ta suboxides; (c) a 5-30 nm thick third layer of metallic Ag and/or Cu; (d) a 0.5-5 (pref. 2) nm thick fourth layer of Ti, Cr, Nb or their mixt. or an alloy contg. at least 15 at.% of one of these metals, in metallic or suboxide form; and (e) a fifth layer of material as in the first layer. Pref. the substrate is a transparent inorganic or organic glass sheet or a transparent organic foil. Also claimed is a method of producing panes, with high transmission properties in the visible spectral region and with high reflection properties for thermal radiation, by cathodic sputter coating transparent substrates with the above layer system.

### BRIEF DESCRIPTION OF THE INVENTION

The present invention relates to glass substrate with low emissivity (low-E) coatings for eliminating the above mentioned disadvantages and for bringing new advantages to the related technical field.

The main object of the present invention is to provide a coated article whose durability value is increased.

In order to realize all of the abovementioned objects and the objects which are to be deducted from the detailed description below the present invention is a coated article including a coating supported by a glass substrate. Accordingly, the coating comprises, in sequence outwardly from the glass substrate:
a first dielectric layer comprising zinc stannate;
a second dielectric layer comprising at least one of TiOₓ, nobium, cromium alloys where the x value is between 1,5 and 2,0 located on and contacting the first dielectric layer;
a seed layer comprising zinc-oxide located on and contacting the second dielectric layer;
an infrared (IR) reflecting layer comprising silver located on the substrate over at least and contacting the seed layer;
a blocking layer comprising NiCrOₓ located over and contacting the IR reflecting layer, where the x value is between 1,5 and 2;
a third dielectric layer comprising TiOₓ located over and contacting with the blocking layer;
a fourth dielectric layer comprising silicon oxynitride (SiOₓN_{y}) where x/y ratio is between 1,8 and 2,2 located over and contacting the third dielectric layer;
and a protective layer comprising TiOₓ,
with at least one of said first dielectric layer, said second dielectric layer or said third dielectric layer is in sub-stoichiometric state,
and each said layer in the coating is deposited by sputter method and the coating has a sheet resistance (RS) between 3 ohms/square and 6 ohms/square and a visible transmission of the coated article is at least 50% and light transmittance factor/solar factor g ratio of the coated article is more than 1,3.

In another preferred embodiment of the subject matter invention, the layers have the following thicknesses,
first dielectric layer comprising zinc stannate: 10-20 nm thick
second dielectric layer comprising TiOₓ: 7-24 nm thick
seed layer comprising zinc-oxide: 1-10nm thick
an infrared (IR) reflecting layer comprising silver: 8-20 nm thick
blocking layer comprising nickel and/or chrome: 1-4 nm thick
third dielectric layer comprising TiOₓ: 10-24 nm thick
fourth dielectric layer comprising silicon oxynitride : 14-34 nm thick
protective layer comprising TiOₓ: 1-5 nm thick

In another preferred embodiment of the subject matter invention, the first dielectric layer comprises zinc stannate being in direct contact with the glass substrate.

In another preferred embodiment of the subject matter invention, the coated article of claim 1, wherein the second dielectric layer comprises TiOx.

In another preferred embodiment of the subject matter invention, at least one of the first dielectric layer, the second dielectric layer and the third dielectric layer has an index of refraction between 1,5 and 2,5; at a wavelength of 550nm.

In another preferred embodiment of the subject matter invention, the protective layer has an index of refraction between 2,2 and 2,7; at a wavelength of 550nm.

In another preferred embodiment of the subject matter invention, the coating has a normal emissivity of no greater than 0.05.

### BRIEF DESCRIPTION OF THE FIGURE

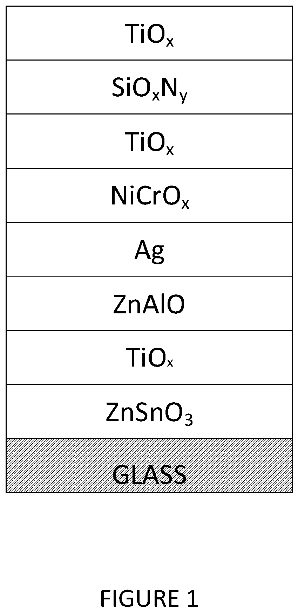

Fig.1 is a cross-sectional view of a coated article comprising a single IR reflecting layer

### DESCRIPTION OF THE PREFERRED EMBODIMENTS

There are several important aspects to be considered before deciding the most suitable layer stack configuration for good mechanical durability, corrosion resistance, scratch resistance and/or an high ratio light transmittance factor/solar factor g ratio, called selectivity, which is determined according to the international standard ISO 9050 (2003).

The bottom layer which will be in contact with the glass surface should be chosen by considering the adhesion performance to glass and capability to block ion migration from the glass surface into the layer stack. It is found that using ZnSnO₃ has good adhesion performance with glass and has sufficient volumetric mass density to block ion migration to the silver layer.

The purpose of usage low-e coated glasses is to maximize the amount of reflected ultraviolet and infrared light back to the interior medium, without compromising the amount of visible light that is transmitted. Silver is the material that is commonly used for this purpose. According to this, low-e layer stacks contains at least one silver layer with a combination of one or more dielectric layers for increasing the IR reflection performance that will increase ratio of visible wavelength transmission to the solar transmission (selectivity). Due to its electronic structure, silver atoms can get oxidized which will cause silver layer to change its characteristics. Also, silver layers should make proper adhesion with the neighboring layers for increasing the mechanical durability of the whole layer stack. The layers above and below the silver layer must block oxygen penetration and having good adhesion with silver layer. Aluminum doped zinc oxide seed layer, which is positioned under the silver layer and nickel-chromium blocker layer, which is positioned above the silver layer, are found to perform a crucial role in rendering the coated glass articles disclosed here durable and effective. The oxidized blocker layer increase in blocker layer density without cracking of the blocking layer. On the other hand, it is crucial to determine the oxygen amount entering to the area where the deposition takes place. Aluminum doped zinc oxide seed layer is highly advantageous for this purpose, since the seed layer being formed underneath silver in a fashion to prevent oxygen diffusion through the seed layer to the silver metal IR reflection layer.

The protective layer ,which is the upper-most layer in the layer stack, should be chosen by considering to have the lowest surface roughness of the coating and having good adhesion performance with the below layer. Another aspect in the inventors' discovery that the usage of the two upper-most layers in the layer stack as SiOₓN_{y} and TiOₓ the scratch resistance of the layer stack improved noticeably. To have the best adhesion to the TiOₓ layer and lowest surface roughness the ratio in the x/y for SiOₓN_{y} should be between 1,8 and 2,2. Also, according to the experiments, the x value for TiOₓ should be between 1,5 and 2,0 to have a good adhesion with SiOₓN_{y}.

There is provided a coated article comprising a coating supported by a glass substrate, the coating comprising the following combination for high mechanical durability and good scratch resistance: a first dielectric layer; a second dielectric layer located on the first dielectric layer; a seed layer located on the second dielectric layer, a first infrared (IR) reflecting layer comprising silver located over the seed layer; a blocking layer located on the first infrared reflecting layer; third dielectric layer located on the blocking layer; fourth dielectric layer located on the third dielectric layer; and a protective layer located over the fourth dielectric layer.

In view of the above, it will be apparent to those skilled in the art that there exists a need in the art for a coated article having desirable mechanical durability, corrosion resistance, and scratch resistance.

One aspect of certain example embodiments relates to the inventors' discovery that using the combination of aluminum doped zinc oxide under the silver layer and usage nickel-chromium oxide above the silver layer is a good combination for achieving a layer stack with high adhesion performance and mechanical durability.

The first dielectric layer produced from ZnSn alloy with 50 wt. % of Zn, 50 wt. of Sn with Ar/O2 working gas between 100-2000sscm, whereby the alloy is oxidized. The oxidation of the alloy blocks ion migration from the glass surface into the coating and increase the adhesion to the glass surface. The deposited layer is in the ZnSnO₃ molecular structure, and the thickness is between 10 nm and 25 nm; in preferred embodiment, the thickness is between 10 nm and 20 nm, best value of the thickness is between 10 nm and 18 nm.

A second dielectric layer located on the ZnSnO₃ layer is produced by one of the Titanium, Nobium, Cromium alloy with Ar/O2 working gas between 100-2000sscm, whereby the alloy is onxidized. The deposited layer is in the TiOₓ molecular structure, and the thickness is between7 nm and 30 nm, in preferred embodiment; the thickness is between 7 nm and 24 nm.

The seed layer located on the TiOₓ layer is produced from a material having a refractive index of 1.7 or greater ZnAl alloy with 98 wt. % of Zn and 2wt. of Al with Ar/O2 working gas between 100-2000sscm, whereby the alloy is oxidized. The oxidation of the alloy will increase the surface smoothness and will protect silver layer against oxygen. The deposited layer is in the ZnO molecular structure, and the thickness is between 1 nm and 10 nm; in preferred embodiment, the thickness is between 1 nm and 4 nm.

An IR layer comprising a silver and the IR layer located on the on the top of the ZnO layer with inert argon working gas; the IR layer thickness is between 8 nm and 20 nm; in preferred embodiment, the thickness is between 11 nm and 18 nm.

The blocking layer located on the IR layer is deposited with NiCr alloy with 80wt. % of Ni 20 wt. % of Cr with Ar/O2 working gas between 100-2000sscm, whereby the alloy is oxidized. This layer will protect IR layer (silver) against oxygen. The deposited layer is in the NiCrOₓ structure, the x value is between 1. 5 and 2 to have a good adhesion with TiOₓ; and the layer thickness is between 1 nm and 4nm.

A third dielectric layer located on the NiCrOₓ layer is deposited with TiOₓ ceramic plate with Ar/O2 working gas between 100-2000sscm.The deposited layer is in the TiOₓ molecular structure, and the thickness is between 10 nm and 24 nm; in preferred embodiment the thickness is between 16 nm and 23 nm.

Fourth dielectric layer located on and contacting the TiOₓ third dielectric layer is deposited with SiAl target with Ar/O₂/N₂ working gas between 100-2000sscm. The deposited layer is in the SiOₓN_{y} molecular structure, x/y ratio is between 1,8 and 2,2 and the thickness is between 14 nm and 34 nm. At least one of the first dielectric layer, the second dielectric layer and the third dielectric layer has an index of refraction between 1,5 and 2,5; at a wavelength of 550nm.

A protective layer located on the SiOₓN_{y} layer is deposited with TiOₓ ceramic plate with Ar/O2 working gas between 100-2000sscm. Due to its molecular orientation, the surface of the alloy will be extremely smooth. Smoother layers may reduce the net compressive forces that highly decrease the bucking that decreases the surface contact area for outside affects that are harmful for the coating. The deposited layer is in the TiOₓ molecular structure, and the thickness is between 1 nm and 5 nm; in preferred embodiment the thickness is between 2 nm and 4 nm. The protective layer has an index of refraction between 2,2 and 2,7; at a wavelength of 550 nm. The coating has a normal emissivity of no greater than 0.05.

Some measurements done to determine the optical performance and sheet resistance which are:

### A. Transmission

The measurement of the transmission takes place with the apparatus from Perkin Elmer spectrofotometer.

### B. Sheet resistance

The measurement of the surface resistance is with the device from Signatone *four-point probe.*

Experiments performed on the sample measurements gave the following results:
**A. Transmission:** between 50% and 74%; preferred between %70 and %74. Light transmittance factor/solar factor g ratio of the coated article is more than 1,3.
**B. Sheet resistance:** between 3 ohms/square and 6 ohms/square; preferred 4,3 ohms/square

According to the experiment results; it will be apparent to those skilled in the art in view of the present disclosure, that the present invention is a significant technological advance. Preferred embodiments of the substantially transparent coatings disclosed here have excellent spectral performance characteristics, including good transmittance of visible light and advantageously low solar transmittance properties, that is, high levels of direct solar radiation which is directly related with a selectivity value which is bigger than 1,3.

In addition to providing selectivity value bigger than 1,3 and high durability ,the resulting coated article can achieve exceptional color properties. The foregoing discussion of color properties is reported using the well-known color coordinates of "L*", "a*" and "b*" to represent the conventional use of the well-known CIE Lab Color System. The properties reported herein can be achieved when using clear glass for the (or each) pane. Thus, for any embodiment (e.g., any combination of properties) noted herein, the (or each) pane can be clear glass, such as clear soda-lime float glass. The invention, however, is not so limited. For example, tinted glass may be used. Glass types other than soda-lime can also be used. The coated article will have Rg(a) value bigger than -1, lower than 4, Rf(a) value bigger than -2, lower than 2 , T(a) value bigger than -4, lower than 0 , T(b)value bigger than -0,5, lower than 3,5, Rg(b) value bigger than -10, lower than -5, Rf(b) value bigger than -10, lower than -5 .

## Claims

1. A coated article including a coating supported by a glass substrate wherein the coating comprises, in sequence outwardly from the glass substrate:
a first dielectric layer comprising zinc stannate;
a second dielectric layer comprising at least one of TiOₓ, nobium, cromium alloys where the x value is between 1,5 and 2,0 located on and contacting the first dielectric layer;
a seed layer comprising zinc-oxide located on and contacting the second dielectric layer;
an infrared (IR) reflecting layer comprising silver located on the substrate over at least and contacting the seed layer;
a blocking layer comprising NiCrOₓ located over and contacting the IR reflecting layer, where the x value is between 1,5 and 2;
a third dielectric layer comprising TiOₓ located over and contacting with the blocking layer;
a fourth dielectric layer comprising silicon oxynitride (SiOₓN_{y}) where x/y ratio is between 1,8 and 2,2 located over and contacting the third dielectric layer;
and a protective layer comprising TiOₓ,
with at least one of said first dielectric layer, said second dielectric layer or said third dielectric layer is in sub-stoichiometric state,
and each said layer in the coating is deposited by sputter method and the coating has a sheet resistance (RS) between 3 ohms/square and 6 ohms/square and a visible transmission of the coated article is at least 50% and light transmittance factor/solar factor g ratio of the coated article is more than 1,3.

2. The coated article of claim 1, wherein the layers have the following thicknesses, first dielectric layer comprising zinc stannate: 10-20 nm thick second dielectric layer comprising TiOₓ: 7-24 nm thick
seed layer comprising zinc-oxide: 1-10nm thick
an infrared (IR) reflecting layer comprising silver: 8-20 nm thick blocking layer comprising nickel and/or chrome: 1-4 nm thick third dielectric layer comprising TiOₓ: 10-24 nm thick
fourth dielectric layer comprising silicon oxynitride : 14-34 nm thick protective layer comprising TiOₓ: 1-5 nm thick

3. The coated article of claim 1, wherein the first dielectric layer comprises zinc stannate being in direct contact with the glass substrate.

4. The coated article of claim 1, wherein the second dielectric layer comprises TiOx.

5. The coated article of claim 1, wherein at least one of the first dielectric layer, the second dielectric layer and the third dielectric layer has an index of refraction between 1,5 and 2,5; at a wavelength of 550nm.

6. The coated article of claim 1, wherein the protective layer has an index of refraction between 2,2 and 2,7; at a wavelength of 550nm.

7. The coated article of claim 1, wherein the coating has a normal emissivity of no greater than 0.05.

## Patentansprüche

1. Beschichteter Gegenstand umfassend eine von einem Glassubstrat unterstützte Beschichtung, worin die Beschichtung vom Glassubstrat nach außen hin der Reihe nach:
eine erste, Zink-Stannat umfassende dielektrische Schicht;
eine zweite, mindestens eine der Legierungen TiOₓ, Nobium, Kromium umfassende, auf und in Kontakt mit der ersten dielektrischen Schicht gelagerte dielektrische Schicht, wobei der Wert x zwischen 1,5 bis 2,0 beträgt;
eine Zinkoxid umfassende, auf und in Kontakt mit der zweiten dielektrischen Schicht gelagerte Keimschicht;
eine Silber umfassende, Infrarot (IR)-reflektierende, auf dem Substrat mindestens über und in Kontakt mit der Keimschicht gelagerte Schicht;
eine NiCrOₓ umfassende, über und in Kontakt mit der IR-reflektierenden Schicht gelagerte Sperrschicht, wobei der Wert x zwischen 1,5 bis 2,0 beträgt;
eine dritte, TiOₓ umfassende, über und in Kontakt mit der Sperrschicht gelagerte dielektrische Schicht;
eine vierte, Siliziumoxinitrid (SiOₓN_{y}) umfassende, über und in Kontakt mit der dritten dielektrischen Schicht gelagerte dielektrische Schicht, wobei das Verhältnis von x/y zwischen 1,8 und 2,2 beträgt;
und eine TiOₓ umfassende Schutzschicht umfasst,
wobei mindestens eine der genannten ersten dielektrischen Schicht, der genannten zweiten dielektrischen Schicht bzw. der genannten dritten dielektrischen Schicht sich in sub-stöchiometrischem Zustand befindet,
und jede sich in der Beschichtung befindende Schicht im Zerstäubungsverfahren aufgetragen wird und die Beschichtung einen Schichtwiderstand (RS) zwischen 3 Ohm/Quadrat bis 6 Ohm/Quadrat besitzt und die sichtbare Durchlässigkeit des beschichteten Gegenstands wenigstens 50% beträgt und der Lichtdurchfässigkeitsfaktor/Sonnenfaktor g-Verhältnis des beschichteten Gegenstands höher als 1,3 ist.

2. Beschichteter Gegenstand nach Anspruch 1, wobei die einzelnen Schichten folgende Dicken aufweisen:
erste, Zink-Stannat umfassende dielektrische Schicht: 10-20 nm dick
zweite, TiOₓ umfassende dielektrische Schicht: 7-24 nm dick
Zinkoxid umfassende Keimschicht: 1-10 nm dick
Silber umfassende, Infrarot (IR)-reflektierende Schicht: 8-20 nm dick
Nickel und/oder Chrom umfassende Sperrschicht: 1-4 nm dick
dritte, TiOₓ umfassende dielektrische Schicht: 10-24 nm dick
vierte, Siliziumoxinitrid umfassende dielektrische Schicht: 14-34 nm dick
TiOₓ umfassende Schutzschicht: 1-5 nm dick

3. Beschichteter Gegenstand nach Anspruch 1, wobei die erste dielektrische Schicht Zink-Stannat in direktem Kontakt mit dem Glassubstrat umfasst.

4. Beschichteter Gegenstand nach Anspruch 1, wobei die zweite dielektrische Schicht TiOₓ umfasst.

5. Beschichteter Gegenstand nach Anspruch 1, wobei mindestens eine der ersten dielektrischen Schicht, der zweiten dielektrischen Schicht bzw. der dritten dielektrischen Schicht bei einer Wellenlänge von 550nm einen Brechungsindex zwischen 1,5 bis 2,5 besitzt.

6. Beschichteter Gegenstand nach Anspruch 1, wobei die Schutzschicht bei einer Wellenlänge von 550nm einen Brechungsindex zwischen 2,2 bis 2,7 besitzt.

7. Beschichteter Gegenstand nach Anspruch 1, wobei die Beschichtung einen normalen Emissionsgrad von nicht grösser als 0.05 besitzt.

## Revendications

1. Un article revêtu comprenant un revêtement supporté par un substrat de verre dans lequel le revêtement comprend, en séquence, vers l'extérieur du substrat de verre; une première couche diélectrique comprenant du stannate de zinc; une seconde couche diélectrique comprenant au moins l'un des alliages TiOx, Nobium, Chrome où la valeur x est comprise entre 1,5 et 2,0 située sur et en contact avec la première couche diélectrique; une couche de germination comprenant de l'oxyde de zinc situé sur et en contact avec la seconde couche diélectrique; une couche réfléchissant l'infrarouge (IR) comprenant de l'argent situé au moins sur le substrat et en contact avec la couche de germination; une couche de blocage comprenant du NiCrOx situé au-dessus et en contact avec la couche réfléchissant l'IR, où la valeur x est comprise entre 1,5 et 2; une troisième couche diélectrique comprenant du TiOx située au-dessus et en contact avec la couche de blocage; une quatrième couche diélectrique comprenant de l'oxynitrure de silicium (SiOxNy) où le rapport x / y est situé entre 1,8 et 2,2 situé au-dessus et en contact avec la troisième couche diélectrique; et une couche protectrice comprenant du TiOx, avec au moins l'une de ladite première couche diélectrique, ladite seconde couche diélectrique ou ladite troisième couche diélectrique est dans un état sous-stoechiométrique, et chaque couche dans le revêtement est déposée par un procédé de pulvérisation cathodique et le revêtement a la résistance de la feuille (RS) entre 3 ohms / carré et 6 ohms / carré et une transmission visible de l'article revêtu est d'au moins 50% et le ratio de facteur de transmission de la lumière / facteur solaire g de l'article revêtu est supérieur à 1,3.

2. Article revêtu selon la revendication 1, dans lequel les couches ont les épaisseurs suivantes, la première couche diélectrique comprenant du stannate de zinc; deuxième couche diélectrique d'une épaisseur de 10-20 nm comprenant une couche de germe de TiOx de 7-24 nm d'épaisseur comprenant de l'oxyde de zinc; une épaisseur de 1 à 10 nm d'une couche réfléchissant l'infrarouge (IR) comprenant de l'argent; Une couche de blocage d'une épaisseur de 8-20 nm comprenant du nickel et / ou du chrome; une troisième couche diélectrique d'une épaisseur de 1 à 4 nm comprenant une quatrième couche diélectrique de TiOx1 de 10-24 nm d'épaisseur comprenant de l'oxynitrure de silicium; Couche protectrice de 14-34 nm d'épaisseur comprenant du TiOx: 1-5 nm d'épaisseur.

3. Article revêtu selon la revendication 1, dans lequel la première couche diélectrique comprend du stannate de zinc en contact direct avec le substrat de verre.

4. Article revêtu selon la revendication 1, dans lequel la seconde couche diélectrique comprend du TiOx.

5. Article revêtu selon la revendication 1, dans lequel au moins l'une des couches parmi la première couche diélectrique, la seconde couche diélectrique et la troisième couche diélectrique a un indice de réfraction compris entre 1,5 et 2,5; à une longueur d'onde de 550 nm.

6. Article revêtu selon la revendication 1, dans lequel la couche protectrice a un indice de réfraction compris entre 2,2 et 2,7; à une longueur d'onde de 550 nm.

7. Article revêtu selon la revendication 1, dans lequel le revêtement a une émissivité normale qui n'est pas supérieure à 0,05
